# EUROPÄISCHE PATENTANMELDUNG

(11) **EP 4 461 119 A1**
(43) Veröffentlichungstag der Anmeldung: **13.11.2024**
(21) Anmeldenummer: 24161925.3
(22) Anmeldetag: 07.03.2024
(51) Int. Cl.: A01D 41/127, A01D 67/04, A01B 69/00, B60N 2/75, B62D 1/12

(54) **LANDWIRTSCHAFTLICHE ARBEITSMASCHINE**

(30) Priorität: 08.05.2023 DE 102023111984
(71) Anmelder: CLAAS Selbstfahrende Erntemaschinen GmbH, 33428 Harsewinkel (DE)
(72) Erfinder: Quednau, Alexander, 73776 Altbach (DE); Bölling, Sebastian, 48145 Münster (DE); Mildt, Natalie, 73776 Altbach (DE); Look, Stefan, 48231 Warendorf (DE)
(74) Vertreter: CLAAS Gruppe

(57) **Zusammenfassung**

Die vorliegende Erfindung betrifft eine landwirtschaftliche Arbeitsmaschine, umfassend eine Fahrerkabine (1), einen Fahrersitz (2), eine benachbart zum Fahrersitz (2) angeordnete Armlehne (3), an der ein Multifunktionsgriff (4) zur Ansteuerung von Arbeitsaggregaten der Arbeitsmaschine angeordnet ist, sowie eine in der Fahrerkabine (1) angeordnete Primärlenkeinrichtung (7), die zum Lenken der Arbeitsmaschine ausgeführt und eingerichtet ist, wobei die Primärlenkeinrichtung (7) vor und beabstandet zu dem Fahrersitz (2) angeordnet ist, wobei in der Fahrerkabine (1) eine Sekundärlenkeinrichtung (29) angeordnet ist, die zum Lenken der Arbeitsmaschine ausgeführt und eingerichtet ist, wobei die Sekundärlenkeinrichtung (29) an einer weiteren an dem Fahrersitz (2) angelenkten Armlehne (10) angeordnet ist, wobei zum Lenken mit der Sekundärlenkeinrichtung (29) die Primärlenkeinrichtung (7) deaktivierbar ist.

## Beschreibung

Die vorliegende Erfindung betrifft eine landwirtschaftliche Arbeitsmaschine, umfassend eine Fahrerkabine, einen Fahrersitz, eine benachbart zum Fahrersitz angeordnete Armlehne, an der ein Multifunktionsgriff zur Ansteuerung von Arbeitsaggregaten der Arbeitsmaschine angeordnet ist, sowie eine in der Fahrerkabine angeordnete Primärlenkeinrichtung, die zum Lenken der Arbeitsmaschine ausgeführt und eingerichtet ist, wobei die Primärlenkeinrichtung vor und beabstandet zu dem Fahrersitz angeordnet ist.

Eine landwirtschaftliche Arbeitsmaschine der eingangs genannten Art ist aus der EP 2 302 483 B1 bekannt. Darin ist eine belüftete Handauflage an einem Multifunktionsgriff beschreiben, welcher der Ansteuerung von Arbeitsaggregaten der als Erntemaschine ausgeführten Arbeitsmaschine dient. Zum Lenken der Erntemaschine ist ein an einer Lenksäule angeordnetes Lenkrad vorgesehen, welches, bezogen auf die Anordnung des Fahrersitzes in der Fahrerkabine, im Wesentlichen mittig vor diesem positioniert ist.

Aus der US 11,314,274 B2 ist eine als Traktor ausgeführte landwirtschaftliche Arbeitsmaschine bekannt, welche einen Multifunktionsgriff mit einer Handauflage offenbart. Auf einer seitlich neben der Handauflage an dem Multifunktionsgriffs tiefer liegenden Ebene sind zusätzliche Bedienelemente angeordnet. Der Traktor weist zum Lenken ein an einer Lenksäule angeordnetes Lenkrad auf, welches ebenfalls, bezogen auf die Anordnung des Fahrersitzes in der Fahrerkabine, im Wesentlichen mittig vor diesem positioniert ist.

Die Bedienung einer Arbeitsmaschine ausschließlich mit dem auf der Lenksäule angeordneten Lenkrad ist in vielen Fahrsituationen unergonomisch. Der Bediener sitzt nach vorne gebeugt und muss eine Hand ausschließlich für die Lenkbewegung nutzen. Die hohen Lenkkräfte führen zu einer schnelleren Ermüdung des Bedieners und zu eingeschränkten Lenkgeschwindigkeiten. Auch führt der Lenkbetrieb mittels des Lenkrades dazu, dass etwaig vorhandene Komfortfeatures des Fahrersitzes, beispielsweise eine Sitzfederung, eine Polsterung oder eine Ausführung als Drehsitz, nicht ideal, d.h. ergonomisch, genutzt werden können.

Ausgehend vom vorstehend genannten Stand der Technik liegt der Erfindung die Aufgabe zugrunde, eine landwirtschaftliche Arbeitsmaschine der eingangs genannten Art weiterzubilden, welche sich durch einen ergonomischeren Lenkbetrieb, insbesondere während der Feldfahrt, auszeichnet.

Diese Aufgabe wird erfindungsgemäß durch eine landwirtschaftliche Arbeitsmaschine mit den Merkmalen des Anspruches 1 gelöst. Vorteilhafte Weiterbildungen sind Gegenstand der abhängigen Ansprüche.

Gemäß dem Anspruch 1 wird eine landwirtschaftliche Arbeitsmaschine vorgeschlagen, umfassend eine Fahrerkabine, einen Fahrersitz, eine benachbart zum Fahrersitz angeordnete Armlehne, an der ein Multifunktionsgriff zur Ansteuerung von Arbeitsaggregaten der Arbeitsmaschine angeordnet ist, sowie eine in der Fahrerkabine angeordnete Primärlenkeinrichtung, die zum Lenken der Arbeitsmaschine ausgeführt und eingerichtet ist, wobei die Primärlenkeinrichtung vor und beabstandet zu dem Fahrersitz angeordnet ist. Erfindungsgemäß ist vorgesehen, dass in der Fahrerkabine eine Sekundärlenkeinrichtung angeordnet ist, die zum Lenken der Arbeitsmaschine ausgeführt und eingerichtet ist, wobei die Sekundärlenkeinrichtung an einer weiteren an dem Fahrersitz angelenkten Armlehne angeordnet ist, wobei zum Lenken mit der Sekundärlenkeinrichtung die Primärlenkeinrichtung deaktivierbar ist.

Wesentlich ist, dass das Vorsehen der Sekundärlenkeinrichtung und deren Anordnung an der weiteren Armlehne gegenüber der Primärlenkeinrichtung einen ergonomischeren Betrieb ermöglicht, indem der Bediener seinen Arm auf der zusätzlichen Armelehne ablegen kann, während er die Arbeitsmaschine mittels der Sekundärlenkeinrichtung lenkt. Hierdurch wird ein ermüdungsfreieres Lenken der Arbeitsmaschine, insbesondere während der Feldfahrt, ermöglicht.

Insbesondere kann die die Primärlenkeinrichtung zu ihrer Deaktivierung in eine Außerbetriebsstellung überführbar sein. Die Primärlenkeinrichtung umfasst zumindest ein eine Lenkbewegung der Arbeitsmaschine beeinflussendes Mittel.

Zu ihrer Deaktivierung kann die Primärlenkeinrichtung durch ein Verschwenken einer die Primärlenkeinrichtung tragenden Lenksäule und/oder nur der Primärlenkeinrichtung respektive des Lenkrades und/oder das Entfernen der Primärlenkeinrichtung von der Lenksäule in die Außerbetriebsstellung überführbar sein. In Abhängigkeit vom verfügbaren Raum innerhalb der Fahrerkabine können die Primärlenkeinrichtung und/oder die Lenksäule seitlich oder in zum Fahrersitz entgegengesetzter Richtung verschwenkt werden. Dies kann zur Verbesserung des Sichtfeldes in Fahrtrichtung beitragen. Alternativ oder zusätzlich kann die Primärlenkeinrichtung von der Lenksäule entfernt werden.

Bevorzugt kann die Primärlenkeinrichtung dem Lenken bei einer Straßenfahrt und die Sekundärlenkeinrichtung dem Lenken bei einer Feldfahrt dienen.

Insbesondere kann die Primärlenkeinrichtung als Lenkrad und die Sekundärlenkeinrichtung als ein Joystick ausgeführt sein.

Vorzugsweise ist die weitere Armlehne mit der Sekundärlenkeinrichtung auf der der Armelehne mit dem Multifunktionsgriff gegenüberliegenden Seite angeordnet. Der Bediener kann beide Arme respektive Unterarme auf der jeweiligen Armlehne ablegen und dabei sowohl den Multifunktionsgriff an der einen Armelehne als auch die Sekundärlenkeinrichtung an der anderen Armlehne unter Einhaltung bzw. Beibehaltung einer ergonomischen Sitzposition betätigen.

Weiter bevorzugt kann die weitere Armlehne durch Schwenken um eine horizontal verlaufende, an dem Fahrersitz angeordnete Schwenkachse aus einer im Wesentlichen horizontalen Betriebsstellung in eine im Wesentlichen vertikale Außerbetriebsstellung überführbar sein. Hierdurch ist eine einfachere Zugänglichkeit des Fahrersitzes gegeben.

Für eine ermüdungsfreie und ergonomische Handhabung der Sekundärlenkeinrichtung kann die weitere Armlehne eine Armauflagefläche sowie eine sich daran anschließende Handauflagefläche aufweisen.

Dabei kann die Sekundärlenkeinrichtung auf der Handauflagefläche angeordnet sein, wobei die Sekundärlenkeinrichtung auf der dem Fahrersitz zugewandten Seite der Handauflagefläche angeordnet ist, so dass bei auf der Handauflagefläche aufliegender Hand eines Bedieners die Sekundärlenkeinrichtung mittels Daumen und Zeigefinger betätigbar ist. Insbesondere ermöglicht diese Anordnung wahlweise eine Bedienung der Sekundärlenkeinrichtung im Pinzettengriff, d.h. die Fingerspitzen von Daumen und Zeigefinger greifen an der Sekundärlenkeinrichtung an, bis hin zum Umschließen der Sekundärlenkeinrichtung in der Hautfalte zwischen Daumen und Zeigefinger.

Gemäß einer Weiterbildung kann die Position der Armauflagefläche relativ zum Fahrersitz höhenverstellbar sowie in vertikaler und horizontaler Richtung durch Schwenken um jeweils zumindest eine Horizontalachse und zumindest eine Vertikalachse einstellbar sein, und dass die Handauflagefläche relativ zur Armlehne mittels eines Kugelgelenks verschwenkbar sein kann. Diese Ausgestaltung ermöglicht es, die Armauflagefläche an eine ergonomische Sitzposition des Bedieners anzupassen. Bevorzugt weist die Armlehne einen ersten horizontal verlaufenden Schwenkarm auf, welcher mit einem Ende an einem Höheneinstellelement um eine erste Horizontalachse schwenkbar angelenkt ist. Das Höheneinstellelement ist vorzugsweise in einer vertikal verlaufenden Schiene geführt, die am Fahrersitz angeordnet ist. Das Höheneinstellelement kann entlang der Schiene in vertikaler Richtung, vorzugsweise stufenlos, auf- und abgleiten und ist mittels eines Fixierelementes in unterschiedlichen Höhenpositionen festlegbar.

Am freien Ende des ersten Schwenkarms, d.h. dem Höheneinstellelement abgewandten Ende, kann ein zweiter horizontal verlaufender Schwenkarm um eine erste Vertikalachse schwenkbar angelenkt sein. Am freien Ende des zweiten Schwenkarms kann ein dritter Schwenkarm um eine zweite Vertikalachse schwenkbar angelenkt sein. Der dritte Schwenkarm kann eine, insbesondere U-förmig ausgeführte, Konsole tragen. Die Konsole kann um eine Horizontalachse schwenkbar an dem dritten Schwenkarm angelenkt sein. Die sich vom dritten Schwenkarm abschnittsweise in vertikaler Richtung weg erstreckende Konsole trägt auf ihrer der Horizontalachse abgewandten Seite die Armauflagefläche. An der Unterseite der Armauflagefläche kann das Kugelgelenk vorgesehen sein, an welcher die Handauflagefläche angelenkt ist. Zur Fixierung der durch das jeweilige Schwenken der hier und vorzugsweise drei Schwenkarme, der Konsole und/oder der Handauflagefläche eingestellten Position der Armlehne respektive Armauflagefläche sowie der Handauflagefläche gegenüber der Armauflagefläche sind der Schwenkachse, der Horizontalachse, den Vertikalachsen und dem Kugelgelenk Fixiermittel, hier und vorzugsweise Klemmhebel oder dergleichen, zugeordnet oder an diesen vorgesehen.

Bevorzugt kann die Handauflagefläche einen konvex geformten Auflagebereich zur Ablage der Mittelhand aufweisen, wobei der Auflagebereich mit luftdurchlässigen Öffnungen versehen ist. Dabei kann eine aktive oder passive Belüftung durch Luftdurch- bzw. Luftzuführung von der Unterseite des Auflagebereichs erfolgen. Die Handauflagefläche kann bevorzugt einteilig ausgeführt sein. Insbesondere kann die Handauflagefläche als Spritzgussteil ausgebildet sein. Weiterhin kann in der Handauflagefläche ein Belüftungstunnel ausgebildet sein, der sich im Wesentlichen vertikal bis zum Auflagebereich mit den luftdurchlässigen Öffnungen erstreckt. Alternativ kann die Handauflagefläche aus einer Unterschale und einer Oberschale bestehen. In der Unterschale kann ein Belüftungstunnel ausgebildet sein, der sich im Wesentlichen vertikal bis zum von der Oberschale gebildeten Auflagebereich mit den luftdurchlässigen Öffnungen erstreckt.

Weiterhin kann sich an den konvex geformten Auflagebereich der Handauflagefläche ein Bediensegment anschließen, welches im Wesentlichen L-förmig abgewinkelt ausgeführt ist, wobei zwischen einem quer zur Längsachse der Armlehne verlaufenden Schenkel des Bediensegments und dem konvex geformten Auflagebereich ein Spalt ausgebildet ist, welcher sich ausgehend von der Sekundärlenkeinrichtung axial in Richtung des Bediensegments und parallel zwischen dem Bediensegment und dem konvex geformten Auflagebereich erstreckt und ein Spaltmaß aufweist, welches das Hindurchstrecken von Fingern zum Umgreifen des konvex geformten Auflagebereichs ermöglicht. Der Spalt ist durch einen parallel zur Längsachse der Armlehne verlaufenden Schenkel des Bediensegments seitlich begrenzt.

Insbesondere kann das Bediensegment mit zumindest einem Bedienelement ausgeführt sein, welches durch einen Finger der auf dem konvex geformten Auflagebereich aufliegenden Hand betätigbar ist. Bevorzugt sind zwei oder mehr Bedienelemente, besonders bevorzugt drei Bedienelemente, auf dem Bediensegment angeordnet.

Des Weiteren kann dem zumindest einen Bedienelement eine Bedienfunktion zuweisbar sein, welche der Sekundärlenkeinrichtung zugeordnet ist und ihre Entsprechung in einer an der Primärlenkeinrichtung vorgesehenen Bedienfunktion hat. Hierzu kann die landwirtschaftliche Arbeitsmaschine eine Steuereinheit und eine Eingabe-Ausgabeeinheit aufweisen, durch welche die freie Zuordnung einer Bedienfunktion zu dem zumindest einen Bedienelement durchführbar ist. Besonders bevorzugt kann dem zumindest einen Bedienelement eine Bedienfunktion zugewiesen werden, welche durch die Betätigung von an der Lenksäule oder zu dieser benachbart angeordneter Bedienelemente ausführbar ist. Das Übertragen von Bedienfunktionen der an der Lenksäule oder zu dieser benachbart angeordneten Bedienelementen, welche ergonomisch schwer zu erreichen sind, ist für einen ergonomischeren und ermüdungsfreieren Betrieb vorteilhaft. Insbesondere kann es sich um eine oder mehrere Bedienfunktionen handeln, die während des Betriebs der landwirtschaftlichen Arbeitsmaschine häufig ausgeführt werden. Dabei kann es sich beispielsweise um das Betätigen von Richtungsanzeiger, Hupe, Radio, Funkgerät oder dergleichen handeln.

Gemäß einer bevorzugten Ausführung ist die Sekundärlenkeinrichtung auf der Handauflagefläche auf einer höherliegenden Ebene angeordnet als das sich daran anschließende Bediensegment. Die Anordnung des Bediensegmentes ist optimal auf die Position der Hand, insbesondere der Ablage der Mittelhand auf dem konvex geformten Auflagebereich der Handauflagefläche, abgestimmt und erlaubt ein ergonomisches Bestätigen der Sekundärlenkeinrichtung auch bei dessen dauerhafter Betätigung. Ebenso vorteilhaft ist diese Ausgestaltung, wenn das zumindest eine dem Bediensegment zugeordnete Bedienelement mittels eines Fingers der auf dem Auflagebereich der Handauflagefläche ruhenden Hand betätigt werden soll.

Gemäß einer Weiterbildung kann an der Handauflagefläche ein Aktivierungselement angeordnet sein, welches zur Aktivierung und Deaktivierung der Sekundärlenkeinrichtung eingerichtet ist. Vorzugsweise ist das Aktivierungselement auf der der Armauflagefläche zugewandten Seite der Handauflagefläche in deren Randbereich angeordnet, wobei das Aktivierungselement auf einer Ebene unterhalb des Auflagebereichs positioniert ist. Durch diese Anordnung soll eine versehentliche Betätigung des Aktivierungselementes vermieden werden, wenn die Hand auf der Handauflagefläche aufliegt.

Die vorliegende Erfindung wird nachstehend anhand eines in den Zeichnungen dargestellten Ausführungsbeispieles näher erläutert.

Es zeigen:
- Fig. 1: schematisch und exemplarisch eine Fahrerkabine einer landwirtschaftlichen Arbeitsmaschine;
- Fig. 2: schematisch und exemplarisch eine perspektivische Ansicht einer an einem Fahrersitz angelenkten Armlehne;
- Fig. 3: schematisch und exemplarisch eine Seitenansicht der Armlehne gemäß Fig. 2;
- Fig. 4: schematisch und exemplarisch eine Draufansicht auf die Armlehne gemäß Fig. 2; und
- Fig. 5: schematisch und exemplarisch eine perspektivische Teilansicht einer Handauflagefläche der Armlehne gemäß Fig. 2.

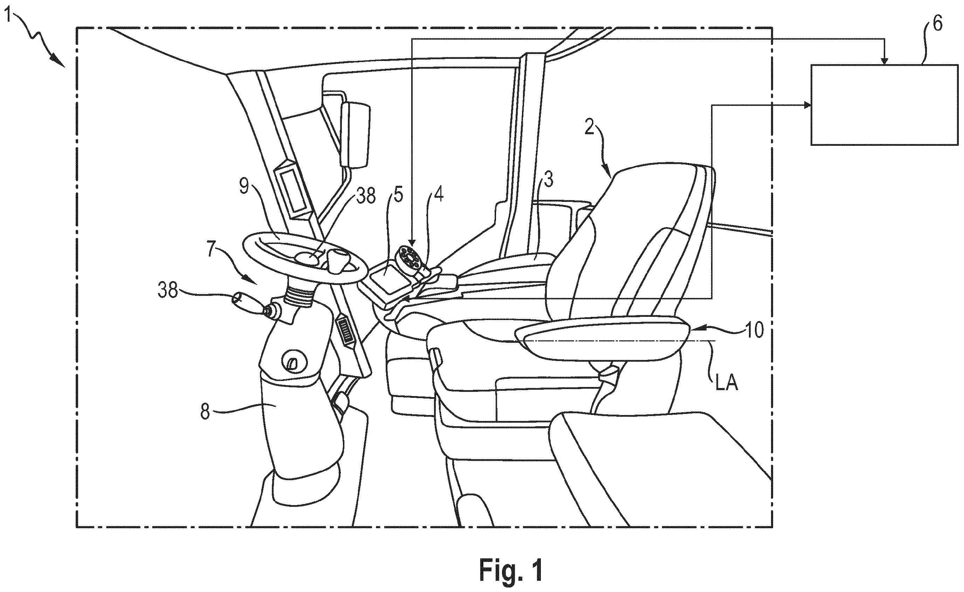

In Fig. 1 ist schematisch und exemplarisch eine Fahrerkabine 1 einer landwirtschaftlichen Arbeitsmaschine dargestellt. Die Arbeitsmaschine kann als selbstfahrender Mähdrescher, Feldhäcksler oder Traktor ausgeführt sein.

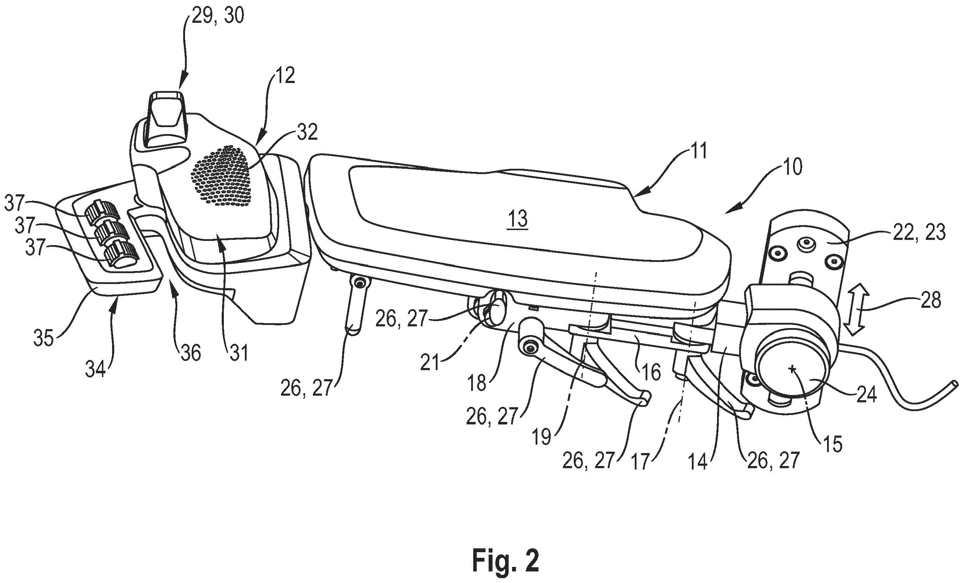

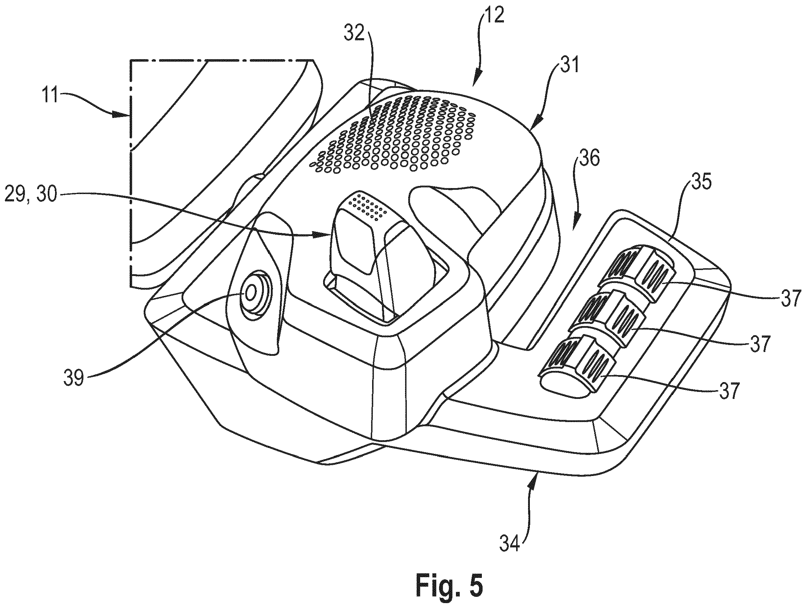

In der Fahrerkabine 1 ist ein Fahrersitz 2 für einen Bediener der Arbeitsmaschine angeordnet. Benachbart zum Fahrersitz 2 ist eine Armlehne 3 an diesem angeordnet. An der Armlehne 3 ist ein Multifunktionsgriff 4 zur Ansteuerung von einem oder mehreren Arbeitsaggregaten der Arbeitsmaschine angeordnet. Weiterhin kann eine Eingabe-Ausgabeeinheit 5 am freien Ende der Armlehne 3 angeordnet sein, welche mit einer Steuereinheit 6 der Arbeitsmaschine verbunden ist. Des Weiteren ist in der Fahrerkabine 2 eine Primärlenkeinrichtung 7 angeordnet, die zum Lenken der Arbeitsmaschine ausgeführt und eingerichtet ist. Die Primärlenkeinrichtung 7 umfasst eine Lenksäule 8 sowie ein daran angeordnetes Lenkrad 9. Die Primärlenkeinrichtung 7 ist vor und beabstandet zu dem Fahrersitz 2 angeordnet. In der Regel orientiert sich die Anordnung von Fahrersitz 2 und Primärlenkeinrichtung 7 zueinander an einer bezogen auf die Längsachse der Fahrerkabine 1 zentrische Position, sodass der Bediener der Arbeitsmaschine auch zu den Seiten ein im Wesentlichen gleiches Sichtfeld hat. Auf der der Armlehne 3 gegenüberliegenden Seite des Fahrersitzes 2 ist eine weitere - exemplarisch dargestellte - Armlehne 10 angeordnet, welche anhand der nachfolgenden Fig. 2 bis 5 erläutert wird. Mit dem Bezugszeichen LA ist eine Längsachse der weiteren Armlehne 10 bezeichnet.

In Fig. 2 ist schematisch und exemplarisch eine perspektivische Ansicht der an dem Fahrersitz 2 angelenkten weiteren Armlehne 10 dargestellt. Die erfindungsgemäße weitere Armlehne 10 weist eine Armauflagefläche 11 sowie eine sich daran anschließende Handauflagefläche 12 auf. Die Armauflagefläche 11 dient im Wesentlichen der Abstützung des Arms des Bedieners durch die Ablage des Unterarms auf der Armauflagefläche 11. Die Armauflagefläche 11 weist dazu eine sich in Längsrichtung der Armlehne 10 erstreckende muldenförmige Ausnehmung 13 auf.

Die Armlehne 10 weist einen horizontal respektive im Wesentlichen parallel zur Längsachse LA verlaufenden ersten Schwenkarm 14 auf. Der erste Schwenkarm 14 ist mit einem Ende an einem Höheneinstellelement 22 um eine Schwenkachse 15 schwenkbar angelenkt ist. Die weitere Armlehne 10 ist durch Schwenken um die horizontal verlaufende, an dem Fahrersitz 2 angeordnete Schwenkachse 15 aus einer im Wesentlichen horizontalen Betriebsstellung in eine im Wesentlichen vertikale Außerbetriebsstellung überführbar.

Das Höheneinstellelement 22 ist vorzugsweise in einer vertikal verlaufenden Schiene 23 geführt, die am Fahrersitz 2 angeordnet ist. Das Höheneinstellelement 22 kann entlang der Schiene 23 in vertikaler Richtung 28, vorzugsweise stufenlos, auf- und abgleiten und ist mittels eines Fixierelementes 24 in unterschiedlichen Höhenpositionen festlegbar.

Am freien Ende des ersten Schwenkarms 14 kann ein zweiter horizontal verlaufender Schwenkarm 16 um eine erste Vertikalachse 17 schwenkbar angelenkt sein. Am freien Ende des zweiten Schwenkarms 16 kann ein dritter Schwenkarm 18 um eine zweite Vertikalachse 19 schwenkbar angelenkt sein. Der dritte Schwenkarm 18 kann eine, insbesondere U-förmig ausgeführte, Konsole 20 tragen. Die Konsole 20 kann um eine Horizontalachse 21 schwenkbar an dem dritten Schwenkarm 18 angelenkt sein. Die sich vom dritten Schwenkarm 18 abschnittsweise in vertikaler Richtung weg erstreckende Konsole 20 trägt auf ihrer der Horizontalachse 21 abgewandten Seite die Armauflagefläche 11.

An der Unterseite der Armauflagefläche 11 kann ein Kugelgelenk 25 vorgesehen sein, an welcher die Handauflagefläche 12 angelenkt ist. Mittels des sechs Freiheitsgrade aufweisenden Kugelgelenks 25 ist die Handauflagefläche 12 relativ zur Armlehne 10 verschwenkbar.

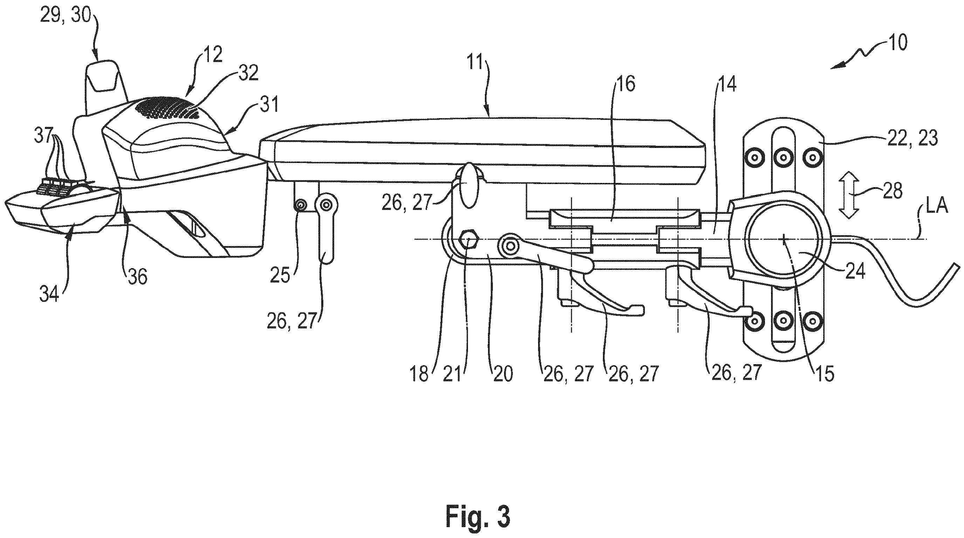

Die drei Schwenkarme 14, 16, 18 sowie die Konsole 20 können miteinander durch scharnierförmig ausgebildete Gelenkstellen miteinander verbunden bzw. aneinander angelenkt sein. Dies ist insbesondere aus Fig. 3 ersichtlich, welche schematisch und exemplarisch eine Seitenansicht der Armlehne 10 gemäß Fig. 2 darstellt.

Zur Fixierung der durch das jeweilige Schwenken um die Schwenkachse 15 und/oder die Horizontalachse 21 und/oder eine oder beide der Vertikalachsen 17, 19 der hier und vorzugsweise drei Schwenkarme 14, 16, 18, der Konsole 20 und/oder der Handauflagefläche 12 eingestellten Position der zweiten Armlehne 10 respektive der Armauflagefläche 11 sowie der Handauflagefläche 12 gegenüber der Armauflagefläche 11 sind Fixiermittel 26, hier und vorzugsweise Klemmhebel 27 oder dergleichen, zugeordnet oder an diesen vorgesehen. Diese Ausgestaltung ermöglicht es, die Armauflagefläche 11 sowie die Handauflagefläche 12 flexibel an eine ergonomische Sitzposition des Bedieners anzupassen.

Auf der Handauflagefläche 12 ist eine Sekundärlenkeinrichtung 29 angeordnet. Die die Sekundärlenkeinrichtung 29 ist bevorzugt als Joystick 30 ausgeführt. Die Sekundärlenkeinrichtung 29 ist auf der dem Fahrersitz 2 zugewandten Seite der Handauflagefläche 12 angeordnet. Somit ist bei auf der Handauflagefläche 12 aufliegender Hand des Bedieners die Sekundärlenkeinrichtung 29 insbesondere lediglich mittels Daumen und Zeigefinger betätigbar. Dabei stützt sich die Hand des Bedieners im Bereich des Handgewölbes auf der Handauflagefläche 12 ab.

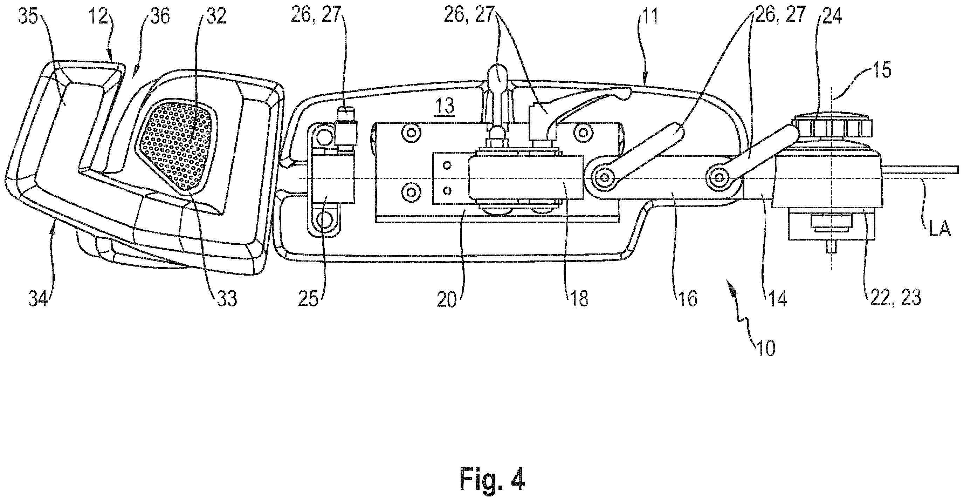

Die Handauflagefläche 12 weist einen konvex geformten Auflagebereich 31 zur Ablage der Mittelhand auf. Der Auflagebereich 31 ist bevorzugt mit luftdurchlässigen Öffnungen 32 versehen. Dabei kann eine aktive oder passive Belüftung durch Luftdurch- bzw. Luftzuführung von der Unterseite des Auflagebereichs 31 erfolgen, was insbesondere aus Fig. 4, welche schematisch und exemplarisch eine Draufansicht auf die Armlehne 10 gemäß Fig. 2 darstellt, ersichtlich ist. So kann in der Handauflagefläche 12 ein Belüftungstunnel 33 ausgebildet sein, der sich im Wesentlichen vertikal bis zum Auflagebereich 31 mit den luftdurchlässigen Öffnungen 32 erstreckt. Die Handauflagefläche 12 ist bevorzugt einteilig ausgeführt. Insbesondere kann die Handauflagefläche 12 als Spritzgussteil ausgebildet sein.

An den konvex geformten Auflagebereich 31 der Handauflagefläche 12 schließt sich ein angeformtes Bediensegment 34 an, welches im Wesentlichen L-förmig abgewinkelt ausgeführt ist. Zwischen einem quer zur Längsachse LA der Armlehne 10 verlaufenden Schenkel 35 des Bediensegments 34 und dem konvex geformten Auflagebereich 31 ist ein Spalt 36 ausgebildet. Der Spalt 36 erstreckt sich ausgehend von der Sekundärlenkeinrichtung 29 axial in Richtung des Bediensegments 34 und parallel zwischen dem Bediensegment 34 und dem konvex geformten Auflagebereich 31. Der Spalt 36 weist ein Spaltmaß, d.h. einen axialen Abstand zwischen dem Auflagebereich 31 und dem Bediensegment 34, auf, welches das Hindurchstrecken von Fingern zum Umgreifen des konvex geformten Auflagebereichs 31 ermöglicht.

Das Bediensegment 34 ist mit zumindest einem Bedienelement 37 ausgeführt, welches durch einen Finger der auf dem konvex geformten Auflagebereich 31 aufliegenden Hand betätigbar ist. Hier und vorzugsweise sind drei Bedienelemente 37 auf dem Bediensegment 34 angeordnet. Bedingt durch die in Querrichtung beabstandete Anordnung der Sekundärlenkeinrichtung 29 und den Bedienelementen 37 und die Bedienbarkeit der der Sekundärlenkeinrichtung 29 lediglich mittels Daumen und Zeigefinger ist eine, insbesondere gleichzeitige, Betätigung zumindest eines der Bedienelemente 37 mittels der übrigen Finger möglich, ohne das Sekundärlenkeinrichtung 29 loslassen zu müssen oder die Position der Hand zu verändern.

Die Sekundärlenkeinrichtung 29 auf der Handauflagefläche 12 ist auf einer höherliegenden Ebene angeordnet als das sich daran anschließende Bediensegment 34. Zwischen der Ebene des Auflagebereichs 31 der Handauflagefläche 12 und dem Bediensegment 34 besteht ein vertikaler Versatz. Die Anordnung des Bediensegmentes 34 ist optimal auf die Position der Hand, insbesondere der Ablage der Mittelhand auf dem konvex geformten Auflagebereich 31 der Handauflagefläche 12, abgestimmt und erlaubt ein ergonomisches Bestätigen der Sekundärlenkeinrichtung 29 auch bei dessen dauerhafter Betätigung.

Der vertikale Versatz zwischen dem Auflagebereich 31 der Handauflagefläche 12 und dem Bediensegment 34 sowie der den Auflagebereich 31 und das Bediensegment 34 beabstandende Spalt 36 ermöglicht ein ergonomisches Arbeiten über einen großen Bereich von Größenperzentilen der Hand verschiedener Bediener.

Bevorzugt kann dem zumindest einen Bedienelement 37 eine Bedienfunktion zuweisbar sein, welche der Sekundärlenkeinrichtung 29 zugeordnet ist und ihre Entsprechung in einer an der Primärlenkeinrichtung 7 vorgesehenen Bedienfunktion hat. Mittels der Steuereinheit 6 und der mit dieser verbundenen Eingabe-Ausgabeeinheit 5 ist eine freie Zuordnung einer Bedienfunktion zu dem zumindest einen Bedienelement 37 an der zweiten Armlehne 10 durchführbar. Besonders bevorzugt kann dem zumindest einen Bedienelement 37 eine Bedienfunktion zugewiesen werden, welche durch die Betätigung von an der Lenksäule oder zu dieser benachbart angeordneter Bedieneinheiten 38 ausführbar ist. Das Übertragen von Bedienfunktionen der an der Lenksäule oder zu dieser benachbart angeordneten Bedieneinheiten 38, welche beispielsweise durch Vorbeugen ergonomisch schwer zu erreichen sind, ist für einen ergonomischeren und ermüdungsfreieren Betrieb vorteilhaft. Insbesondere kann es sich um eine oder mehrere Bedienfunktionen handeln, die während des Betriebs der landwirtschaftlichen Arbeitsmaschine häufig ausgeführt werden. Dabei kann es sich bei den Bedieneinheiten 38, deren Bedienfunktionen übertragen werden, beispielsweise um das Betätigen von Richtungsanzeiger, Hupe, Radio, Funkgerät oder dergleichen handeln.

An der Handauflagefläche 12 ist ein Aktivierungselement 39 angeordnet ist, welches zur Aktivierung und Deaktivierung der Sekundärlenkeinrichtung 29 eingerichtet ist. Vorzugsweise ist das Aktivierungselement 39 auf der der Armauflagefläche 11 zugewandten Seite der Handauflagefläche 12 in deren Randbereich angeordnet. Das Aktivierungselement 39 ist auf einer Ebene unterhalb des Auflagebereichs 31 positioniert ist. Durch diese Anordnung soll eine versehentliche Betätigung des Aktivierungselementes 39 vermieden werden, wenn die Hand auf der Handauflagefläche 12 respektive dem Auflagebereich 31 aufliegt.

Zusätzlich zu der ergonomischen Ausgestaltung der die Sekundärlenkeinrichtung 29 tragenden Armelehne 10 besteht ein weiterer Aspekt der vorliegenden Erfindung darin, dass zum Lenken mit der Sekundärlenkeinrichtung 29 die Primärlenkeinrichtung 7 deaktivierbar ist. Wesentlich ist dabei, dass das Vorsehen der Sekundärlenkeinrichtung 29 und deren Anordnung an der weiteren Armlehne 10 gegenüber der Primärlenkeinrichtung 7 einen ergonomischeren Betrieb ermöglicht, indem der Bediener seinen Arm auf der zusätzlichen Armelehne 10 ablegen kann, während er die Arbeitsmaschine mittels der Sekundärlenkeinrichtung 29 lenkt, die im Wesentlichen unmittelbar zum Fahrersitz 2 benachbart angeordnet ist. Hierdurch wird ein ermüdungsfreieres Lenken der Arbeitsmaschine, insbesondere während der Feldfahrt, ermöglicht.

Dazu kann die die Primärlenkeinrichtung 7 zu ihrer Deaktivierung in eine Außerbetriebsstellung überführbar sein. Hierzu kann die Primärlenkeinrichtung 7 durch Verschwenken einer das Lenkrad 9 tragenden Lenksäule 8 und/oder nur des Lenkrades 9 und/oder das Entfernen des Lenkrades 7 von der Lenksäule 8 in die Außerbetriebsstellung überführbar sein. In Abhängigkeit vom verfügbaren Raum innerhalb der Fahrerkabine 1 können die Primärlenkeinrichtung 7, d.h. das Lenkrad 9 und/oder die Lenksäule 8, seitlich oder in zum Fahrersitz 2 entgegengesetzter Richtung verschwenkt werden. Dies kann zur Verbesserung des Sichtfeldes in Fahrtrichtung beitragen. Alternativ oder zusätzlich kann die Primärlenkeinrichtung 7 von der Lenksäule 8 entfernt werden. Bevorzugt kann die Primärlenkeinrichtung 7 dem Lenken bei einer Straßenfahrt und die Sekundärlenkeinrichtung 29 dem Lenken bei einer Feldfahrt dienen.

### Bezugszeichenliste

| | | | |
|---|---|---|---|
| 1 | Fahrerkabine | 34 | Bediensegment |
| 2 | Fahrersitz | 35 | Schenkel |
| 3 | Armlehne | 36 | Spalt |
| 4 | Multifunktionsgriff | 37 | Bedienelement |
| 5 | Eingabe-Ausgabeeinheit | 38 | Bedieneinheit |
| 6 | Steuereinheit | 39 | Aktivierungselement |
| 7 | Primärlenkeinrichtung | LA | Längsachse von 10 |
| 8 | Lenksäule | | |
| 9 | Lenkrad | | |
| 10 | Armlehne | | |
| 11 | Armauflagefläche | | |
| 12 | Handauflagefläche | | |
| 13 | Ausnehmung | | |
| 14 | Erster Schwenkarm | | |
| 15 | Schwenkachse | | |
| 16 | Zweiter Schwenkarm | | |
| 17 | Erste Vertikalachse | | |
| 18 | Dritter Schwenkarm | | |
| 19 | Zweite Vertikalachse | | |
| 20 | Konsole | | |
| 21 | Horizontalachse | | |
| 22 | Höheneinstellelement | | |
| 23 | Schiene | | |
| 24 | Fixierelement | | |
| 25 | Kugelgelenk | | |
| 26 | Fixiermittel | | |
| 27 | Klemmhebel | | |
| 28 | Vertikale Richtung | | |
| 29 | Sekundärlenkeinrichtung | | |
| 30 | Joystick | | |
| 31 | Auflagebereich | | |
| 32 | Öffnung | | |
| 33 | Belüftungstunnel | | |

## Patentansprüche

1. Landwirtschaftliche Arbeitsmaschine, umfassend eine Fahrerkabine (1), einen Fahrersitz (2), eine benachbart zum Fahrersitz (2) angeordnete Armlehne (3), an der ein Multifunktionsgriff (4) zur Ansteuerung von Arbeitsaggregaten der Arbeitsmaschine angeordnet ist, sowie eine in der Fahrerkabine (1) angeordnete Primärlenkeinrichtung (7), die zum Lenken der Arbeitsmaschine ausgeführt und eingerichtet ist, wobei die Primärlenkeinrichtung (7) vor und beabstandet zu dem Fahrersitz (2) angeordnet ist, **dadurch gekennzeichnet, dass** in der Fahrerkabine (1) eine Sekundärlenkeinrichtung (29) angeordnet ist, die zum Lenken der Arbeitsmaschine ausgeführt und eingerichtet ist, wobei die Sekundärlenkeinrichtung (29) an einer weiteren an dem Fahrersitz (2) angelenkten Armlehne (10) angeordnet ist, wobei zum Lenken mit der Sekundärlenkeinrichtung (29) die Primärlenkeinrichtung (7) deaktivierbar ist.

2. Landwirtschaftliche Arbeitsmaschine nach Anspruch 1, **dadurch gekennzeichnet, dass** die Primärlenkeinrichtung (7) zu ihrer Deaktivierung in eine Außerbetriebsstellung überführbar ist.

3. Landwirtschaftliche Arbeitsmaschine nach Anspruch 2, **dadurch gekennzeichnet, dass** die Primärlenkeinrichtung (7) durch Verschwenken einer die Primärlenkeinrichtung (7) tragenden Lenksäule (8) und/oder der Primärlenkeinrichtung (7) und/oder das Entfernen der Primärlenkeinrichtung (7) von der Lenksäule (8) in die Außerbetriebsstellung überführbar ist.

4. Landwirtschaftliche Arbeitsmaschine nach einem der Ansprüche 1 bis 3, **dadurch gekennzeichnet, dass** die Primärlenkeinrichtung (7) dem Lenken bei einer Straßenfahrt und die Sekundärlenkeinrichtung (29) dem Lenken bei einer Feldfahrt dient.

5. Landwirtschaftliche Arbeitsmaschine nach einem der Ansprüche 1 bis 4, **dadurch gekennzeichnet, dass** die weitere Armlehne (10) mit der Sekundärlenkeinrichtung (29) auf der der Armelehne (3) mit dem Multifunktionsgriff (4) gegenüberliegenden Seite angeordnet ist.

6. Landwirtschaftliche Arbeitsmaschine nach einem der Ansprüche 1 bis 5, **dadurch gekennzeichnet, dass** die weitere Armlehne (10) durch Schwenken um eine horizontal verlaufende, an dem Fahrersitz (2) angeordnete Schwenkachse (15) aus einer im Wesentlichen horizontalen Betriebsstellung in eine im Wesentlichen vertikale Außerbetriebsstellung überführbar ist.

7. Landwirtschaftliche Arbeitsmaschine nach einem der Ansprüche 1 bis 6, **dadurch gekennzeichnet, dass** die weitere Armlehne (10) eine Armauflagefläche (11) sowie eine sich daran anschließende Handauflagefläche (12) aufweist.

8. Landwirtschaftliche Arbeitsmaschine nach Anspruch 7, **dadurch gekennzeichnet, dass** die Sekundärlenkeinrichtung (29) auf der Handauflagefläche (12) angeordnet ist, wobei die Sekundärlenkeinrichtung (29) auf der dem Fahrersitz (2) zugewandten Seite der Handauflagefläche (12) angeordnet ist, so dass bei auf der Handauflagefläche (12) aufliegender Hand eines Bedieners die Sekundärlenkeinrichtung (29) mittels Daumen und Zeigefinger betätigbar ist.

9. Landwirtschaftliche Arbeitsmaschine nach einem der Ansprüche 7 oder 8, **dadurch gekennzeichnet, dass** die Position der Armauflagefläche (11) relativ zum Fahrersitz (2) höhenverstellbar sowie in vertikaler und horizontaler Richtung durch Schwenken um jeweils zumindest eine Horizontalachse (15, 21) und eine Vertikalachse (17, 19) einstellbar ist, und dass die Handauflagefläche (12) relativ zur Armlehne (10) mittels eines Kugelgelenks (21) verschwenkbar ist.

10. Landwirtschaftliche Arbeitsmaschine nach einem der Ansprüche 7 bis 9, **dadurch gekennzeichnet, dass** die Handauflagefläche (12) einen konvex geformten Auflagebereich (31) zur Ablage der Mittelhand aufweist, wobei der Auflagebereich (31) mit luftdurchlässigen Öffnungen (32) versehen ist.

11. Landwirtschaftliche Arbeitsmaschine nach Anspruch 10, **dadurch gekennzeichnet, dass** sich an den konvex geformten Auflagebereich (31) der Handauflagefläche (12) ein Bediensegment (34) anschließt, welches im Wesentlichen L-förmig abgewinkelt ausgeführt ist, wobei zwischen einem quer zur Längsachse (LA) der Armlehne (10) verlaufenden Schenkel (35) des Bediensegments (34) und dem konvex geformten Auflagebereich (31) ein Spalt (36) ausgebildet ist, welcher sich ausgehend von der Sekundärlenkeinrichtung (29) axial in Richtung des Bediensegments (34) und parallel zwischen dem Bediensegment (34) und dem konvex geformten Auflagebereich (31) erstreckt und ein Spaltmaß aufweist, welches das Hindurchstrecken von Fingern zum Umgreifen des konvex geformten Auflagebereichs (31) ermöglicht.

12. Landwirtschaftliche Arbeitsmaschine nach Anspruch 11, **dadurch gekennzeichnet, dass** das Bediensegment (34) mit zumindest einem Bedienelement (37) ausgeführt ist, welches durch einen Finger der auf dem konvex geformten Auflagebereich (31) aufliegenden Hand betätigbar ist.

13. Landwirtschaftliche Arbeitsmaschine nach Anspruch 12, **dadurch gekennzeichnet, dass** dem zumindest einen Bedienelement (37) eine Bedienfunktion zuweisbar ist, welche der Sekundärlenkeinrichtung (29) zugeordnet ist und ihre Entsprechung in einer an der Primärlenkeinrichtung (7) vorgesehenen Bedienfunktion hat.

14. Landwirtschaftliche Arbeitsmaschine nach einem der Ansprüche 10 bis 13, **dadurch gekennzeichnet, dass** die Sekundärlenkeinrichtung (29) auf der Handauflagefläche (12) auf einer höherliegenden Ebene angeordnet ist als das sich daran anschließende Bediensegment (37).

15. Landwirtschaftliche Arbeitsmaschine nach einem der Ansprüche 7 bis 14, **dadurch gekennzeichnet, dass** an der Handauflagefläche (12) ein Aktivierungselement (39) angeordnet ist, welches zur Aktivierung und Deaktivierung der Sekundärlenkeinrichtung (29) eingerichtet ist.
